# EUROPEAN PATENT APPLICATION

(11) **EP 1 469 464 A2**
(43) Date of publication of application: **20.10.2004**
(21) Application number: 04008759.5
(22) Date of filing: 13.04.2004
(51) Int. Cl.: G11B 7/125, G11B 7/135, G11B 7/26

(54) **A beam shaping device, an optical head, and a master disk recording apparatus**

(30) Priority: 14.04.2003 JP 2003108642
(71) Applicant: MATSUSHITA ELECTRIC INDUSTRIAL CO., LTD., Kadoma-shi, Osaka 571-8501 (JP)
(72) Inventor: Abe, Shinya, Kadoma-shi Osaka (JP); Ito, Eiichi, Nishinomiya-shi Hyogo (JP)
(74) Representative: Leson, Thomas Johannes Alois, Dipl.-Ing.

(57) **Abstract**

A beam shaping device (103) shapes a light beam from a light source to have a circular cross section, and changes the refractive index thereof by causing an electric field to be produced by a voltage applied to electrodes (110,111) thereof. In this way, the light beam from the light source is deflected, and an objective lens gather the shaped and deflected light beam to expose an optical disk.

## Description

### BACKGROUND OF THE INVENTION

### Field of the Invention

The present invention relates to a beam shaping device for shaping a light beam, an optical head using such a beam shaping device, and a master disk recording apparatus using such an optical head.

### Description of the Background Technology

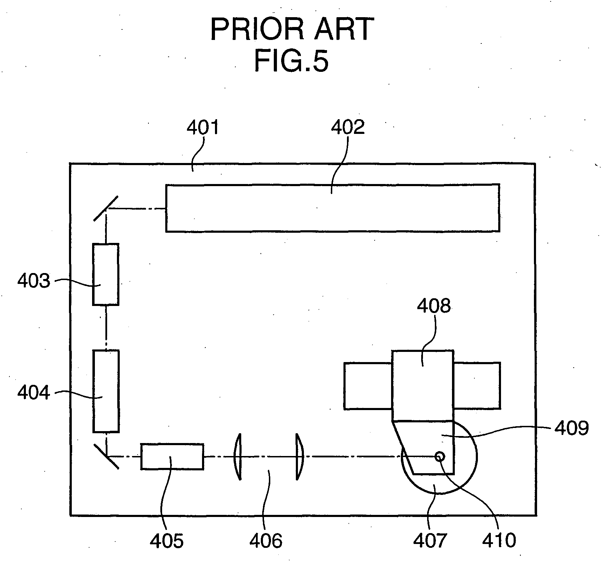

Conventionally, an optical head fabricated by miniaturizing and integrating a light source, an optical system and a detection system has been mounted on an optical disk drive to record information in an optical disk and reproduce the recorded information. FIG. 4 is a schematic diagram showing a construction of a conventional optical head. A light source 301 shown in FIG. 4 is comprised of a semiconductor laser, and emits a light beam having an elliptical cross section in the form of a linearly polarized light. The emitted light beam is introduced to a beam splitter 304 after being shaped to have a substantially circular cross section by a lens 302 and a prism-shaped beam shaping device 303. The light beam having passed through the beam splitter 304 is gathered onto an optical disk 309 by an objective lens 306 after being changed into a circularly polarized light by a λ/4 wavelength plate 305. In this way, the optical disk 309 is exposed to record information on the optical disk 309.

At the time of reproduction, a light beam is emitted in a similar manner to the optical disk 309 having the information recorded thereon, and the reflected light beam is changed back into a linearly polarized light by the λ/4 wavelength plate 305. The light beam changed into the linearly polarized light is reflected by the beam splitter 304 to be incident on a light detector 308. The recorded information is reproduced by detecting a modulation in the intensity of the light beam detected by the light detector 308 in this way.

The objective lens 306 is mounted on an actuator 307 and has its position adjusted in two axial directions, i.e. forward and backward directions and transverse direction, by the actuator 307 as described below. For example, a recording-type optical disk is formed with a meandering guide groove called wobble, and a track is specified by this wobble to have a spiral shape. The optical head carries out recording and reproduction while controlling a distance between the optical disk 309 and the objective lens 306 to be constant by the adjusting function of the actuator 307 and causing the objective lens 306 to follow the track using the wobble.

Further, various master disk recording apparatuses have been developed for recording information on a master disk by exposing the master disk to light similar to the above optical head. One of these apparatuses is disclosed, for example, in Japanese Unexamined Patent Publication NO. 2001-195747. FIG. 5 is a schematic diagram showing a construction of a conventional master disk recording apparatus. In the apparatus shown in FIG. 5, a light source 402, a light intensity regulator 403, a modulating element 404, a deflecting element 405, a beam expander 406 and a slider 408 are arranged on a vibration-proof table 401.

A light beam emitted from the light source 402 comprised of a gas laser is reflected by a mirror to be introduced to the light intensity regulator 403, thereby being adjusted to a specified light intensity by the light intensity regulator 403. The light beam having the light intensity thereof adjusted is reflected by the mirror and introduced to the deflecting element 405 to be deflected thereby after being modulated by the modulating element 404 in accordance with information to be recorded. The deflected light beam is introduced to the optical head 409 via the beam expander 406, and gathered onto the master disk 407 formed with a photosensitive layer, whereby this photosensitive layer is exposed.

Here, the optical head 409 is provided with a actuator (not shown) movable along one axial direction and an objective lens 410, and a distance between the master disk 407 and the objective lens 410 is controlled to be constant by the actuator. Further, the optical head 409 is moved in a radial direction of the master disk 407 by the slider 408, and the master disk 407 is rotated while being held on a turn table (not shown). In this way, the photosensitive layer of the master disk 407 is exposed by the optical head 409 to form a master disk having a specified pattern.

However, the above conventional optical head needs to be provided with the mechanical actuator 307 in order to cause the objective lens 306 to follow the track while controlling the distance between the optical disk 309 and the objective lens 306. Due to its lower mechanical precision and follow-up frequency, this optical head cannot be used in a master disk recording apparatus which needs to wobble the light beam while highly precisely controlling the position of the light beam.

On the other hand, the conventional master disk recording apparatus is forced to have a larger size as a whole since the light source 402 comprised of the gas laser is large and many elements have to be mounted on the vibration-proof table 401. Further, the length of an optical axis from the light source 402 to a recording point on the master disk 407 becomes longer, and the optical axis and light intensity are likely to change at the recording point due to the influence of the shift of the optical axis variation such as pointing which occurs during the use.

### SUMMARY OF THE INVENTION

An object of the present invention is to provide an optical head capable of highly precisely controlling the position of a light beam, a beam shaping device used in such an optical head, and a small-size master disk recording apparatus in which such an optical head is used.

A first aspect of the present invention is directed to a beam shaping device for shaping a light beam, characterized in that the refractive index of the beam shaping device changes in accordance with an applied voltage.

Since this beam shaping device shapes the light beam and its refractive index changes in accordance with the applied voltage, the light beam can be deflected at the same time it is shaped. Thus, the beam shaping device can be caused to have two functions: a shaping function and a deflecting function. Therefore, a small-size optical head capable of highly precisely controlling the position of the light beam can be realized by being constructed using this optical head.

A second aspect of the present invention is directed to an optical head, comprising a light source for emitting a light beam; a beam shaping device for shaping the light beam from the light source; an objective lens for gathering the light beam from the beam shaping device; and a driving means for driving the objective lens, wherein the refractive index of the beam shaping device changes in accordance with an applied voltage.

Since this beam shaping device can be caused to have the shaping function and the deflecting function in this optical head, the position of the light beam can be highly precisely controlled and this optical head can be miniaturized.

A third aspect of the present invention is directed to an optical head, comprising a semiconductor laser for emitting a light beam; an objective lens for gathering the light beam; a driving means for driving the objective lens; and a deflecting element provided between the semiconductor laser and the objective lens for deflecting the light beam from the semiconductor laser.

Since the deflecting element for deflecting the light beam from the light source is provided between the semiconductor laser and the objective lens in this optical head, the light source can be made smaller, and the light beam can be highly precisely deflected by this deflecting element. As a result, the position of the light beam can be highly precisely controlled and this optical head can be miniaturized.

A fourth aspect of the present invention is directed to a master disk recording apparatus, comprising a rotating means for rotating while holding a master disk having a photosensitive layer; an optical head for gathering a light beam and irradiating the master disk with the gathered light beam; and a moving means for moving one of the optical head and the rotating means in a radial direction of the master disk, wherein the optical head includes a light source for emitting the light beam, a beam shaping device for shaping the light beam from the light source, an objective lens for gathering the light beam from the beam shaping device, and a driving means for driving the objective lens, wherein the refractive index of the beam shaping device changes in accordance with an applied voltage.

Since this master disk recording apparatus can be constructed using the small-size optical head capable of highly precisely controlling the position of the light beam, the position of the light beam can be highly precisely controlled and the master disk recording apparatus can be miniaturized.

A fifth aspect of the present invention is directed to a master disk recording apparatus, comprising a rotating means for rotating while holding a master disk having a photosensitive layer; an optical head for gathering a light beam and irradiating the master disk with the gathered light beam; and a moving means for moving one of the optical head and the rotating means in a radial direction of the master disk, wherein the optical head includes a semiconductor laser for emitting the light beam, an objective lens for gathering the light beam, a driving means for driving the objective lens, and a deflecting element provided between the semiconductor laser and the objective lens for deflecting the light beam from the semiconductor laser.

Since this master disk recording apparatus can be constructed with the use of the small-size optical head using the semiconductor laser as the light source and capable of highly precisely controlling the position of the light beam, the position of the light beam can be highly precisely controlled and the master disk recording apparatus can be miniaturized.

These and other objects, features and advantages of the present invention will become more apparent upon a reading of the following detailed description and accompanying drawings.

### BRIEF DESCRIPTION OF THE DRAWINGS

FIG. 1 is a schematic diagram showing a construction of an optical head according to one embodiment of the invention,
FIG. 2 is a side view of a beam shaping device shown in FIG. 1,
FIG. 3 is a schematic diagram showing a construction of a master disk recording apparatus using the optical head shown in FIG. 1,
FIG. 4 is a schematic diagram showing a construction of a conventional optical head, and
FIG. 5 is a schematic diagram showing a construction of a conventional master disk recording apparatus.

### DESCRIPTION OF PREFERRED EMBODIMENTS

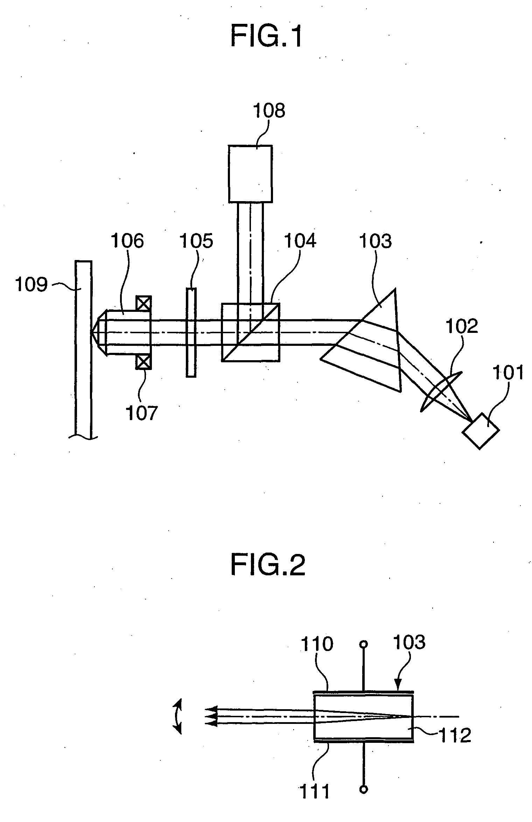

Hereinafter, an optical head according to one embodiment of the present invention is described with reference to the accompanying drawings. FIG. 1 is a schematic diagram showing a construction of an optical head according to one embodiment of the invention.

The optical head shown in FIG. 1 is provided with a light source 101, a lens 102, a beam shaping device 103, a polarized beam splitter 104, a λ/4 wavelength plate 105, an objective lens 106, an actuator 107 and a light detector 108.

The light source 101 is comprised of a semiconductor laser, e.g. a violet semiconductor laser having a wavelength of about 400 nm, and a light beam of a linearly polarized light is emitted from the light source 101 while spreading. Since the semiconductor laser is used as the light source 101, the intensity of the emitted light beam can be directly adjusted and modulated by driving the semiconductor laser using a specified driving circuit (not shown). It should be noted that the wavelength of the semiconductor laser used as the light source 101 is preferably 460 nm or shorter. In such a case, information can be recorded and reproduced at a high density than a DVD. Further, it is preferable that the lower limit of the wavelength of the semiconductor laser used as the light source 101 is, for example, 300 nm or longer.

The lens 102 introduces the light beam from the light source 102 to the beam shaping device 103 after converting it into a parallel beam. The beam shaping device 103 is a prism-shaped beam shaping device whose incidence surface and emission surface are not parallel, and introduces the light beam emitted from the lens 102 and having an elliptical cross section to the polarized beam splitter 104 after shaping it to have a circular cross section. The polarized beam splitter 104 lets the light beam from the beam shaping device 103 transmit therethrough to introduce it to the λ/4 wavelength plate 105. The λ/4 wavelength plate 105 introduces the light beam from the polarized beam splitter 104 to the objective lens 106 after converting it into a circularly polarized light. The objective lens 106 gathers the light beam from the λ/4 wavelength plate 105 to expose the optical disk 109 on which recording is to be made. In this way, information is recorded on the optical disk 109.

The objective lens 106 also introduces the light beam reflected by the optical disk 109 to the λ/4 wavelength plate 105. The λ/4 wavelength plate 105 turns a direction of polarization of the light beam from the objective lens 106 by 90° to convert the light beam into a linearly polarized light, which is then introduced to the polarized beam splitter 104. The polarized beam splitter 104 introduces the light beam from λ/4 wavelength plate 105 to the light detector 108 after reflecting it. The light detector 108 detects a modulation in the intensity of the light beam from the polarized beam splitter 104.

Here, the objective lens 106 is mounted on the actuator 107 as one example of a driving means. The actuator 107 moves the objective lens 106 in a direction perpendicular to the optical disk 109 (focusing direction). Further, the light detector 108 has a function of detecting a change in distance between the objective lens 106 and the optical disk 109. The distance between the objective lens 106 and the optical disk 109 is controlled to be constant by controlling the actuator 107 by means of a specified control circuit (not shown) using a detection signal of the light detector 108.

FIG. 2 is a side view of the beam shaping device 103 shown in FIG. 1. The beam shaping device shown in FIG. 2 is comprised of two electrodes 110, 111 and a nonlinear optical material 112. The two electrodes 110, 111 are so provided on the triangular upper and bottom surfaces of the beam shaping device 103 as to face each other. The nonlinear optical material 112 is provided between these two electrodes 110, 111. It should be noted that the electrodes are not particularly restricted to those of this example and changed in various manners. For example, one, three or more electrodes may used.

The electrodes 110, 110 produce an electric field upon the application of a voltage serving as a deflection signal from a specified voltage generating circuit (not shown). In response to the produced electric field, the crystalline orientation of the nonlinear optical material 112 is so set as to change the refractive index of the nonlinear optical material 112 by the electrooptic effect. In this example, the refractive index changes in a direction perpendicular to the electrodes 110, 111. By aligning this direction and the direction of deflection of the light source 101, angles of refraction of the light beam upon being incident on and emitting from the beam shaping device 103 change according to the change of the refractive index, whereby the direction of the transmitted light can be deflected as shown in FIG. 2.

By letting the beam shaping device 103 have a function of electromagnetically deflecting the light beam, the light beam can be deflected at a very high speed, and the deflected light beam passes through the objective lens 106 and the like to change the position on the optical disk 109 at a high speed. By setting this position changing direction to a direction perpendicular to a track of the optical disk 109, i.e. a radial direction of the optical disk 109, the position of a recording spot can be moved in the radial direction of the optical disk 109 in accordance with the deflection signal, whereby so-called wobble can be recorded on the optical disk 109.

For example, a phosphate crystal, a lithate crystal or a borate crystal can be preferably used the nonlinear optical material 112 forming the beam shaping device 103. More specifically, KDP (potassium dihydrogen phosphate), ADP (ammonium dihydrogen phosphate), LiNbO (lithium niobate), BBO (barium borate) or the like can be used. It should be noted that the nonlinear optical material 112 is not particularly limited to the above examples. Any material may be used provided that it experiences a change in refractive index by the electrooptic effect. Further, since some of crystals such as KDP, ADP, LiNbO and BBO have a property of deliquescence, the optical head is preferably kept dry by being purged with dry nitrogen or the like.

As described above, since the beam shaping device 103 can be caused to have a shaping function and a deflecting function in this embodiment, the position of the light beam can be highly precisely controlled so as to enable the recording of the wobble and the light head can be miniaturized.

Although the light detector 108 detects a change in the distance between the objective lens 106 and the optical disk 109 based on the reflected one of the recording light in this embodiment, a light of an other wavelength, e.g. a red light may be combined with the recording light and caused to be incident on the objective lens 106, and a change in the distance between the objective lens 106 and the optical disk 109 may be separately detected based on the red light reflected by the optical disk 109.

Although the beam shaping device 103 is caused to have the deflecting function in this embodiment, the other element between the beam shaping device 103 and the objective lens 106, e.g. the polarized beam splitter 104 may be caused to have the polarizing function or a separate deflecting element may be inserted to obtain similar effects.

Further, although the optical head using the actuator 107 driven along one axis is used to record the wobble in this embodiment, the present invention is not particularly limited thereto. For example, in the case of tracking by means of an actuator driven along two axes and having a tracking function, the actuator may be used for the correction of the position of the recording spot or the other purpose by the above deflecting function such as when the objective lens 106 is moved in the radial direction, i.e. the recording spot is moved by a so-called lens shift.

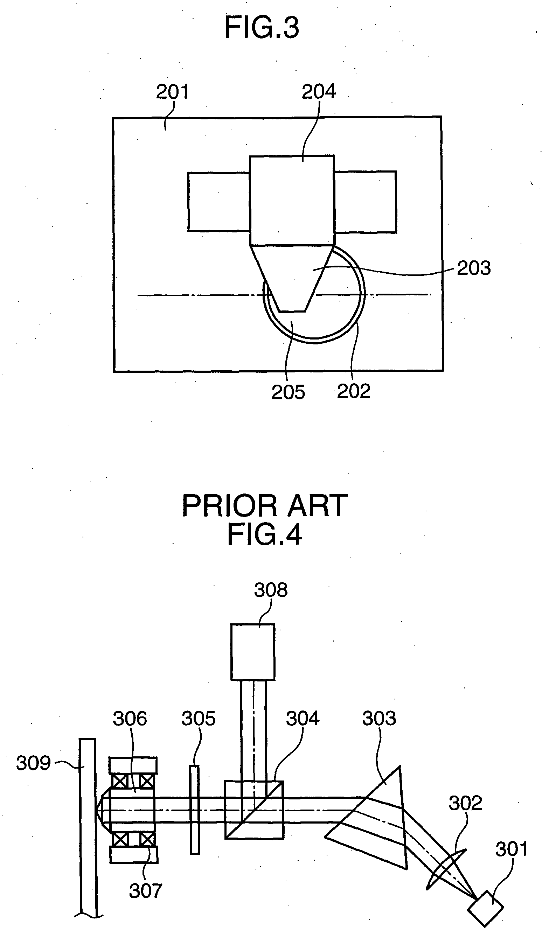

Next, a master disk recording apparatus using the optical head constructed as above is described. FIG. 3 is a schematic diagram showing a construction of the master disk recording device using the optical head of FIG. 1.

The master disk recording apparatus shown in FIG. 3 is provided with a vibration-proof table 201, a turn table 202, an optical head 203 and a slider 204. The turn table 202 and the slider 204 are installed on the vibration-proof table 201, and the optical head 203 shown in FIG. 1 is fixed to the slider 204.

The turn table 202 as one example of a rotating means rotates while holding a master disk 205 formed with a photosensitive layer by applying a photosensitive material, and the slider 204 as one example of a moving means moves the optical head 203 in a radial direction of the master disk 205. The position of the objective lens 106 of the optical head 203 spirally moves with respect to the master disk 205 by the cooperation of the turn table 202 and the slider 204.

At this time, the semiconductor laser as the light source 101 of the optical head 203 modulates the intensity of a light beam in accordance with a modulation signal to be recorded, and the beam shaping device 103 deflects the light beam in accordance with a deflection signal. The wobble can be highly precisely recorded by moving the recording spot gathered on the master disk 205 using the intensity-modulated and deflected light beam. In this way, a pattern in which the wobble is also recorded can be highly precisely formed on the master disk 205, whereby a master disk for an optical disk having a higher density than a DVD can be produced.

As described above, since the beam shaping device 103 of the optical head 203 can be caused to have a shaping function and a deflecting function in this master disk recording apparatus, the light beam can be highly precisely deflected and the position of the light beam can be highly precisely controlled, with the result that the master disk having the wobble recorded with high precision can be produced.

Further, since the semiconductor laser is used as the light source 101 of the optical head 203, it is sufficient to install only the turn table 202 and the slider 204 on the vibration-proof table 201. Thus, this recording apparatus can be made remarkably smaller than the conventional master disk recording apparatus having the gas laser mounted on the vibration-proof table. Further, a reduction in pitch precision resulting from mechanical vibration by the vibration of a cooling water required for the gas laser used in the conventional master disk recording apparatus can be prevented.

Furthermore, since the recording optical system is closed in the small-size optical head 203, the optical axis is considerably shortened, and the influence of a wind caused by the turn table 202 can be suppressed to a minimum level. Therefore, the shift of the optical axis is very unlikely to occur, with the result that stable recording can be realized.

Although the optical head 203 is moved by the slider 204 in the above description, the optical head 203 is fixed to the vibration-proof table 201 and the turn table 202 may be drive by a specified moving mechanism.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds are therefore intended to embraced by the claims.

A beam shaping device shapes a light beam from a light source to have a circular cross section, and changes the refractive index thereof by causing an electric field to be produced by a voltage applied to electrodes thereof. In this way, the light beam from the light source is deflected, and an objective lens gather the shaped and deflected light beam to expose an optical disk.

## Claims

1. A beam shaping device for shaping a light beam, **characterized in that** the refractive index of the beam shaping device changes in accordance with an applied voltage.

2. A beam shaping device according to claim 1, comprising at least two electrodes for applying the voltage and a nonlinear optical material arranged between the electrodes.

3. A beam shaping device according to claim 2, wherein the beam shaping device is a substantially prism-shaped beam shaping device whose incidence surface and emission surface are not parallel and which changes an emerging angle of the light beam.

4. A beam shaping device according to claim 2, wherein the nonlinear optical material is a phosphate crystal.

5. A beam shaping device according to claim 2, wherein the nonlinear optical material is a lithate crystal.

6. A beam shaping device according to claim 2, wherein the nonlinear optical material is a borate crystal.

7. An optical head, comprising:
a light source for emitting a light beam,
a beam shaping device for shaping the light beam from the light source,
an objective lens for gathering the light beam from the beam shaping device, and
a driving means for driving the objective lens,
wherein the refractive index of the beam shaping device changes in accordance with an applied voltage.

8. An optical head according to claim 7, wherein the beam shaping device includes at least two electrodes for applying the voltage and a nonlinear optical material arranged between the electrodes.

9. An optical head according to claim 7, wherein the light source emits the light beam using a semiconductor laser.

10. An optical head according to claim 7, wherein the wavelength of the light source is 460 nm or shorter.

11. An optical head, comprising:
a semiconductor laser for emitting a light beam,
an objective lens for gathering the light beam,
a driving means for driving the objective lens, and
a deflecting element provided between the semiconductor laser and the objective lens for deflecting the light beam from the semiconductor laser.

12. An optical head according to claim 11, wherein the deflecting element is a beam shaping device for shaping the light beam and the refractive index thereof changes in accordance with an applied voltage.

13. An optical head according to claim 12, wherein the beam shaping device includes at least two electrodes for applying the voltage and a nonlinear optical material arranged between the electrodes.

14. An optical head according to claim 11, wherein the wavelength of the semiconductor laser is 460 nm or shorter.

15. A master disk recording apparatus, comprising:
a rotating means for rotating while holding a master disk having a photosensitive layer,
an optical head for gathering a light beam and irradiating the master disk with the gathered light beam, and
a moving means for moving one of the optical head and the rotating means in a radial direction of the master disk,
wherein the optical head includes a light source for emitting the light beam, a beam shaping device for shaping the light beam from the light source, an objective lens for gathering the light beam from the beam shaping device, and a driving means for driving the objective lens, wherein the refractive index of the beam shaping device changes in accordance with an applied voltage.

16. A master disk recording apparatus according to claim 15, wherein the beam shaping device includes at least two electrodes for applying the voltage and a nonlinear optical material arranged between the electrodes.

17. A master disk recording apparatus, comprising:
a rotating means for rotating while holding a master disk having a photosensitive layer,
an optical head for gathering a light beam and irradiating the master disk with the gathered light beam, and
a moving means for moving one of the optical head and the rotating means in a radial direction of the master disk,
wherein the optical head includes a semiconductor laser for emitting the light beam, an objective lens for gathering the light beam, a driving means for driving the objective lens, and a deflecting element provided between the semiconductor laser and the objective lens for deflecting the light beam from the semiconductor laser.

18. A master disk recording apparatus according to claim 17, wherein the deflecting element is a beam shaping device for shaping the light beam and the refractive index thereof changes in accordance with an applied voltage.

19. A master disk recording apparatus according to claim 18, wherein the beam shaping device includes at least two electrodes for applying the voltage and a nonlinear optical material arranged between the electrodes.
